(19) Europäisches Patentamt
European Patent Office
Office européen des brevets

(11) EP 4 377 059 B1

(12) **EUROPEAN PATENT SPECIFICATION**

(45) Date of publication and mention of the grant of the patent:
**03.09.2025 Bulletin 2025/36**

(21) Application number: **22754140.6**

(22) Date of filing: **26.07.2022**

(51) International Patent Classification (IPC):
***B29B 13/02*** $^{(2006.01)}$ ***C08L 71/00*** $^{(2006.01)}$
***C08L 71/10*** $^{(2006.01)}$

(52) Cooperative Patent Classification (CPC):
(C-Sets available)
**C08L 71/00; C08L 71/10;** C08G 2650/40 (Cont.)

(86) International application number:
**PCT/GB2022/051949**

(87) International publication number:
**WO 2023/007141 (02.02.2023 Gazette 2023/05)**

(54) **PIPE AND METHOD OF PRODUCTION**

ROHR UND VERFAHREN ZUR HERSTELLUNG

TUYAU ET SA MÉTHODE DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2021 GB 202110832**

(43) Date of publication of application:
**05.06.2024 Bulletin 2024/23**

(73) Proprietor: **Victrex Manufacturing Limited**
**Thornton Cleveleys, Lancashire FY5 4QD (GB)**

(72) Inventors:
- **SIMMONITE, James**
  **Cleveleys, Lancashire FY5 4QD (GB)**
- **SIMPSON, Gayle**
  **Cleveleys, Lancashire FY5 4QD (GB)**
- **GRASMEDER, John**
  **Cleveleys, Lancashire FY5 4QD (GB)**
- **CHAPLIN, Adam**
  **Cleveleys, Lancashire FY5 4QD (GB)**

(74) Representative: **Thompson, Nicola Ruth**
**Victrex Manufacturing Limited**
**Intellectual Property Department**
**Victrex Technology Centre**
**Hillhouse International**
**Thornton Cleveleys, Lancs. FY5 4QD (GB)**

(56) References cited:
**WO-A1-2012/107753 WO-A1-2020/212704**
**WO-A1-2020/240161 WO-A1-2021/089746**

- **YI NAN ET AL: "Slow and fast crystallising poly aryl ether ketones (PAEKs) in 3D printing: Crystallisation kinetics, morphology, and mechanical properties", ADDITIVE MANUFACTURING, vol. 39, 1 March 2021 (2021-03-01), NL, pages 101843, XP055971150, ISSN: 2214-8604, DOI: 10.1016/ j.addma.2021.101843**
- **LING JI ET AL: "Miscibility of poly(ether ether ketone)/poly(ether diphenyl ether ketone) blends", POLYMER, ELSEVIER, AMSTERDAM, NL, vol. 37, no. 18, 1 September 1996 (1996-09-01), pages 4205 - 4208, XP022518792, ISSN: 0032-3861, DOI: 10.1016/0032-3861(96) 00202-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/00, C08L 71/00;**
**C08L 71/00, C08L 81/06;**
**C08L 71/10, C08L 71/10;**
**C08L 71/10, C08L 81/06**

## Description

The present invention relates to the use of certain polymers to manufacture polymer pipes. The invention is particularly relevant to the manufacture of thick walled pipes having particularly low levels of residual stress within their structure and at the same time a beneficially low variability in residual stress levels along the full length of the pipe. The invention further relates to a process for forming such high specification polymer pipes.

Pipes formed from thermoplastic polymers - for example a polyaryletherketone (PAEK) polymer such as polyetheretherketone (PEEK) may be of value in a range of industries, including the oil, gas and aerospace sectors for example. However, due to the often rapid crystallisation rates of PAEK polymers, extruded thick walled pipes may exhibit significant internal residual stresses that can adversely impact the operability of the pipe in use, causing fracture or failure of the pipe.

For example, when a pipe is cut to size, low residual stress in the pipe reduces the problem of the pipe shattering outwards, or cracking from the line of the intended cut. Furthermore, a pipe with lower residual stress will be less prone to failure through fatigue, slow crack propagation or physical impact and be more suitable for use in situations where the pipe carries high pressure fluid or is subject to high external forces. Achieving a low variability in residual stress levels all along the length of a pipe can provide a number of technical benefits. For example, it may avoid locally increased stresses which could act as initiation sites for failure. It may also minimise or completely avoid unwanted bends in different places along the length of the pipe. Furthermore, ensuring consistent properties may assist subsequent processing - for example a process to bond composite laminates onto the outer surface of the pipe. One of the aims of the present invention is to provide a pipe that exhibits good stability against exposure to certain types of chemicals. Such chemical-resistant and consistently low stress pipes may be attractive for use in the oil and gas industries, aerospace industry and other industrial sectors where high specification pipes are of particular value.

Crystallisation rates in polymers, in particular, in PAEK polymers, may be modelled using Avrami models as described in Seo et al. Jiho Seo, Anne M. Gohn, Richard P. Schaake, Daniele Parisi, Alicyn M. Rhoades, and Ralph H. Colby, Macromolecules 2020 53 (9), 3472-3481, DOI: 10.1021/acs.macromol.9b02611.

WO2012/107753 A1 describes a process and apparatus for producing a polyetheretherketone (PEEK) pipe having a length greater than 250 metres and a residual stress of less than 5MPa. Example 1 of WO2012/107753 A1 reports an 8 inch pipe with a residual stress measurement of 1.64MPa.

WO 2020/240161 A1 relates to a process for making long pipes (e.g. >300m) from certain types of thermoplastic polymer (e.g. a polyaryletherketone polymer) via a single extrusion process without a certain type of visible defect occurring on the wall of the pipe during manufacture. The process involves a pre-conditioning step for the polymer feedstock. Accordingly, the disclosure also relates to the polymer pre-conditioning process, and the conditioned polymer feedstock itself. The disclosure also relates to the long polymer pipes without a certain type of visible defect, formed using the pre-conditioned polymer.

WO 2020/212704 A1 relates to a very long pipe formed in a single extrusion process from certain types of thermoplastic polymer [for example a polymer from the polyaryletherketone (PAEK) family, such as polyetheretherketone (PEEK)] where such pipes are manufactured in a way that delivers a particularly low occurrence of certain types of defects. Said defects include an area of the pipe wall that has a thickness that is too high or too low vs a desired specification or a section of pipe where the outside diameter is too high or too low versus a desired specification. The invention further relates to a process for forming such long polymer pipes.

WO 2012/107753 A1 discloses a polyetheretherketone pipe of length greater than 250 meters and a residual stress of less than 5MPa that may be made using a calibrator device (2) which includes a cone shaped opening (6) arranged to receive a molten extruded pipe shaped polymer. Attached to the front member (4) is a vacuum plate (14a) and successive vacuum plates (14b-14h) are attached to one another to define an array of vacuum plates, the vacuum plates being arranged to allow a vacuum to be applied to a pipe precursor passing through opening (16). The vacuum plates (14) also include (10) temperature control means for heating or cooling the plates and therefore heating or cooling a pipe precursor passing through the openings. With a vacuum applied to opening (6, 16) and heating/cooling the plates, an extruded hot plastics pipe is inserted into calibrator (2) via opening (6) and conveyed through opening (16) in plates (14), whereupon it is urged by the vacuum against the cylindrical surface defined by plates (14) to maintain its shape and the (15) temperature of each plate is controlled to control the rate of cooling of the pipe precursor passing through. The pipe may be cooled at a relatively slow rate so that a pipe made from a relatively fast crystallising polymer crystalises and the crystallinity of the pipe along its extent and throughout its thickness is substantially constant.

WO 2021/089746 A1 pertains to a polymer blend based on PEDEK-PEEK copolymer, which, thanks to the predominance of PEDEK-type units in the copolymer (PEDEK-PEEK), and to the blending with a polyphenylsulfone polymer (PPSU), is effective in delivering superior combination of improved strength and modulus at elevated temperatures and improved ductility, and which is endowed with beneficial partial miscibility behaviour, which is unexpected and advantageous, both for retaining similar high temperature resistance of polymer (PPSU) component, but also for avoiding phase separation and/or reduction in crystallization rate and loss of high temperature performances.

YI NAN ET AL: "Slow and fast crystallising poly aryl ether ketones (PAEKs) in 3D printing: Crystallisation kinetics, morphology, and mechanical properties", ADDITIVE MANUFACTURING, vol. 39, 1 March 2021 (2021-03-01), page 101843, describes that Poly aryl ether ketone (PAEK) polymers are gaining interest in 3D printing for their good mechanical properties and high service temperatures. The aim of this study was to compare the crystallisation kinetics, morphology, and mechanical properties of two different PAEK polymers used in fused filament fabrication (FFF), i.e. the fast-crystallising PEEK151 (poly ether ether ketone) grade originally designed for injection moulding and the slow crystallising AM 200 grade tailored specifically for FFF. The crystallisation kinetics of both grades were examined across a wide temperature range. A method to select annealing temperatures and annealing times based on the intrinsic crystallisation behaviour of each polymer was proposed. The dual-Avrami model highlighted a different crystallite growth for AM 200 in comparison with PEEK151 with a higher rate of secondary crystallisation. Lamellar thicknesses were measured by SAXS and calculated via the Thomson-Gibbs equation. The lamellar thicknesses of primary and secondary crystallisation for AM 200 showed a stronger temperature dependence with steeper slopes when increasing the isothermal temperature. The benefit of using a slow crystallising PAEK polymer over the conventional fast crystallising grades is evidenced by the improvement in Z strength which enhances the overall isotropy of printed parts.

LING JI ET AL: "Miscibility of poly(ether ether ketone)/poly(ether diphenyl ether ketone) blends", POLYMER, ELSE VIER, AMSTERDAM, NL, vol. 37, no. 18, 1 September 1996 (1996-09-01), pages 4205-4208, describes that poly(ether ether ketone) and poly(ether diphenyl ether ketone) homopolymers are prepared by nucleophilic substitution routes. Miscibility of PEEK/PEDEK blends has been studied by wide-angle X-ray diffraction (WAXD) and differential scanning calorimetry (d.s.c.). The results indicate that for PEEK/PEDEK blends, when the PEDEK content (weight fraction) is greater than 0.20 and less than 0.75, PEEK and PEDEK components form independent crystalline regions, i.e. they are immiscible; when the PEDEK content is in the range $W_{PEDEK} \leq 0.20$ or $\geq 0.75$, a rich PEEK- or PEDEK-rich content crystallizes from a mixed melt and PEEK and PEDEK are miscible.

Accordingly, in one aspect of the invention provides a use of a polymer composition to manufacture of pipe having a length of at least 1 metre, wherein the polymeric composition comprises one or more polymeric materials each comprising:

(a) phenylene moieties;
(b) ether and/or thioether moieties; and optionally
(c) ketone and/or sulfone moieties;

wherein the polymeric composition has a degree of crystallisation as determined by differential scanning calorimetry, DSC, wherein the variation of the degree of crystallisation with time of the polymeric composition fits a modified Avrami model wherein:

the primary crystallisation rate constant, $K_1$, Log10($K_1$) is equal to or less than -8, and at least or equal to -13;
the primary Avrami number, $n_1$, is at least 2.5 and less than or equal to 3.5; and
the secondary Avrami number, $n_2$, is at least 1.4 and less than or equal to 2.6.

The dual Avrami model may be used to describe the degree of crystallisation as a function of time,

$$\propto (t) = \frac{1-e^{(-K_1 t^{n1})}}{1-e^{(-K_1 t^{n1})}+e^{((-K_1 t^{n2})\left(\frac{-\ln (0.5)}{K_1}\right)^{\left(1-\left(\frac{n2}{n1}\right)\right)}}};$$

wherein $K_1$, $n_1$, and $n_2$ are the kinetic parameters. This dual Avrami model was derived by Seo et. al in Jiho Seo, Anne M. Gohn, Richard P. Schaake, Daniele Parisi, Alicyn M. Rhoades, and Ralph H. Colby, Macromolecules 2020 53 (9), 3472-3481 DOI: 10.1021/acs.macromol.9b02611.

By using the polymer composition according to the present invention, the overall residual stress of a long pipe is reduced across the entire length of the pipe while the crystallinity and therefore chemical resistance is maintained. Balancing good crystallinity and low residual stress is challenging, but is achieved by the present invention.

In one embodiment, Log10($K_1$) is preferably less than or equal to - 9 and at least or more than - 12.

The polymeric composition may comprise a single polymeric material, or a mixture of two or more polymeric materials. The polymeric composition may be a copolymer or a blend of one or more polymers or copolymers.

In one embodiment, the polymeric composition comprises a first polyaryletherketone polymer (PAEK) and a second slower crystallising PAEK polymer, for example a PEEK-PEDEK copolymer, a copolymer containing -ether-phenyl-ether-phenyl-carbonyl-phenyl-(i.e. PEEK) and -ether-phenyl-phenyl-ether-phenyl-carbonyl-phenyl- (i.e. PEDEK) repeat units. The addition of the slower crystallising PAEK polymer, e.g. a PEEK-PEDEK copolymer to the PAEK polymer is that the polymeric composition has modified crystallisation kinetics.

In one embodiment the slower crystallising PAEK is selected from the following:

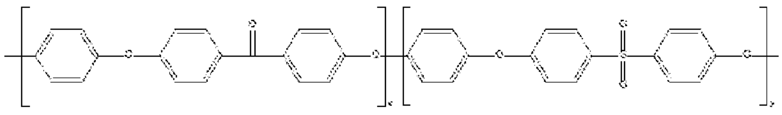

PEEK-PEES

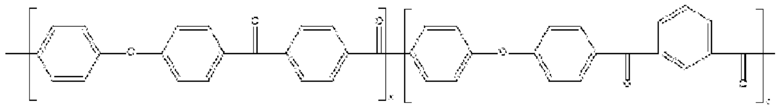

PEKK m/p = 80:20

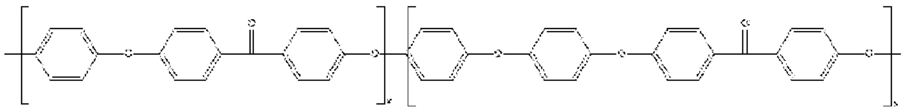

PEEK-PEDEK

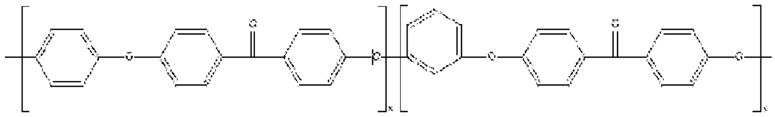

m-PEEK

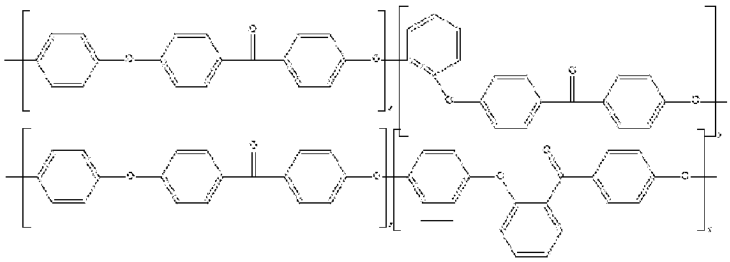

o-PEEK

PEEK from 2,4'-BDF

In one embodiment, the polymeric composition may include a first polymeric material having a high molecular weight Mw, and a second polymeric material having a low molecular weight Mw. In one example, the weight ratio of the first polymeric material and the second polymeric material is 70:30 to 97:3.

In another embodiment, the polymeric composition may include a first polymeric material is a PEEK polymer, and a second polymeric material is a PPSU polymer. In one example, the weight ratio of the first polymeric material and the second polymeric material is 70:30 to 99:1, and more preferably, the weight ratio of the first polymeric material and the second polymeric material is 90:10 to 99:1.

In another embodiment, the polymeric composition may include a first polymeric material is a semi crystalline PAEK, and a second polymeric material is an amorphous PAEK. In one example, the weight ratio of the first polymeric material and the second polymeric material is 70:30 to 99:1, and more preferably, the weight ratio of the first polymeric material and the second polymeric material is 90:10 to 99:1.

In one embodiment, the polymeric composition comprises a blend of a first polyetheretherketone - a polymer containing -ether-phenyl-ether-phenyl-carbonyl-phenyl-(i.e. PEEK) and a PEEK-PEDEK copolymer, a copolymer containing -ether-phenyl-ether-phenyl-carbonyl-phenyl-(i.e. PEEK) and -ether-phenyl-phenyl-ether-phenyl-carbonyl-phenyl- (i.e. PEDEK) repeat units.

As explained hereinafter, the composition may include one or more fillers and/or colouring materials etc. The elongate opening of the calibrator device preferably includes a tapered mouth at the end of the elongate opening where the hot extruded pipe is received. The use of a mould-release agent [mold-release agent (in USA-English)] on the calibrator device in the area where a hot extruded pipe is received may be beneficial.

According to a further aspect of the invention, there is provided a method of manufacturing a polymer pipe from a polymer composition to manufacture of pipe having a length of at least 1 metre, wherein the polymeric composition comprises one or more polymeric materials each comprising:

(a) phenylene moieties;
(b) ether and/or thioether moieties; and optionally
(c) ketone and/or sulfone moieties;

wherein the polymeric composition has a degree of crystallisation as determined by differential scanning calorimetry, DSC, wherein the degree of crystallisation fits a modified Avrami model wherein:

the primary crystallisation rate constant, $K_1$, Log10($K_1$) is equal to or less than -8, and at least or equal to -13;
the primary Avrami number, $n_1$, is at least 2.5 and less than or equal to 3.5; and
the secondary Avrami number, $n_2$, is at least 1.4 and less than or equal to 2.6;

the method comprising the steps of by extruding the polymeric composition through a suitably shaped die and using a calibrator device to controllably cool the pipe.

A further aspect of the invention provides a process for making a pipe (for example a pipe as described herein), the process comprising:

(i) using a calibrator device which includes an elongate opening for receiving a hot extruded pipe, wherein the elongate opening includes a vacuum applying region arranged to apply a vacuum to the outer surface of the pipe within the elongate opening, said device further comprises two or more temperature-controlled regions spaced apart along the length of the calibrator, said temperature controlled regions being arranged to apply a cooling effect to the pipe as it passes through the elongate opening, said calibrator device being in contact with one or more heat transfer fluids so as to assist said cooling effect on the pipe in each of the two or more temperature-controlled regions;
(ii) introducing a hot extruded pipe into the elongate opening of the calibrator and conveying the pipe through the elongate opening; while
(iii) applying a vacuum to the outer surface of the pipe as it passes through the calibrator; wherein
(iv) the temperature of the heat-transfer fluid used for the first temperature-controlled region to come into contact with the hot extruded pipe is 60°C or lower;
(v) the temperature of heat-transfer fluid used for the subsequent temperature-controlled region(s) is/are in the range of 80°C to 150°C; and wherein
(vi) the pipe has a polymer composition comprising one or more polymeric materials each comprising:

(a) phenylene moieties;
(b) ether and/or thioether moieties; and optionally
(c) ketone and/or sulfone moieties, wherein,

the polymeric composition has a degree of crystallisation as determined by differential scanning calorimetry, DSC, wherein the variation of the degree of crystallisation with time fits a modified Avrami model wherein:

the primary crystallisation rate constant, $K_1$, Log10($K_1$) is equal to or less than -8, and at least or equal to -13;
the primary Avrami number, $n_1$, is at least 2.5 and less than or equal to 3.5; and
the secondary Avrami number, $n_2$, is at least 1.4 and less than or equal to 2.6.

In one embodiment any polymeric material has a repeat unit of formula (I):

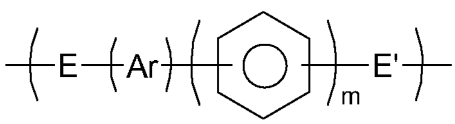

I

and/or a repeat unit of formula **(II):**

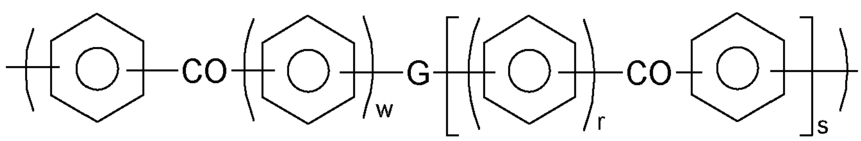

II

and/or a repeat unit of formula (III):

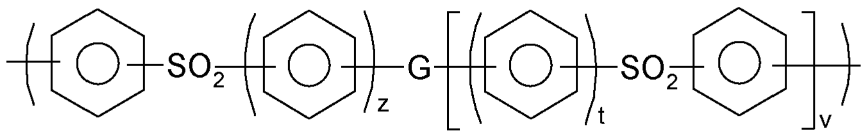 III

wherein:

- **m, r,** s, **t,** v, w and z each independently represent zero or a positive integer;
- E and E' each independently represent -O-, -S- or a direct bond;
- G represents -O-, -S-, a direct bond or -O-phenylene-O-; and
- **Ar** is -phenylene-C(O)-phenylene-, -phenylene-$C(CH_3)_2$-phenylene-, -phenylene-O-(1,4-phenylene)-O-phenylene-, -phenylene- or -phenylene-C(O)-phenylene-C(O)-phenylene-.

In some embodiments the phenylene groups mentioned in this specification are 1,4-linked to adjacent groups.

In one embodiment where **Ar** is -phenylene-C(O)-phenylene-C(O)-phenylene- the central phenylene may be 1,3- or 1,4-substituted to the adjacent carbonyl groups.

In one embodiment where **Ar** is -phenylene-C(O)-phenylene-C(O)-phenylene- the central phenylene is 1,4-substituted to the adjacent carbonyl groups.

In one embodiment, the polymeric material may comprise a repeat unit of formula **(I)** and no other repeat units. In one embodiment the polymeric material may be polyphenylenesulphide.

In one embodiment, the polymeric material may include more than one different type of repeat unit of formula (I); and more than one different type of repeat unit of formula (II); and more than one different type of repeat unit of formula (III).

In one embodiment the polymeric material only includes repeat units of formula (I).

In one embodiment the polymeric material only includes repeat units of formula (II).

In one embodiment the polymeric material only includes repeat units of formula (III).

In one embodiment the polymeric material has repeat units consisting essentially of repeat units of formula **(I), (II)** and/or (III).

In some embodiments the phenylene groups in units of formula **(I), (II)** and **(III)** are not additionally substituted. In some embodiments the phenylene groups in units of formula **(I), (II)** and **(III)** are not cross-linked.

Where **w** and/or z is/are greater than zero, each phenylene may independently be 1,4- or 1,3-linked to adjacent atoms in the repeat units of formula **(II)** and/or **(III).**

In some embodiments where **w** and/or z is/are greater than zero, each phenylene is 1,4-linked.

In one embodiment **G** represents -O-, a direct bond or a -O-phenylene-O- group.

In one embodiment **G** is a direct bond.

**"a", "b" and "c"** can be defined to represent the mole% of units of formula **(I), (II)** and **(III)** respectively within the polymeric material.

In one embodiment each unit of formula **(I)** in said polymeric material is the same.

In one embodiment each unit of formula **(II)** in said polymeric material is the same.

In one embodiment each unit of formula **(III)** in said polymeric material is the same.

In one embodiment **a** is 20 or less. In one embodiment a is 10 or less. In one embodiment **a** is 5 or less. In one embodiment **a** is in the range from 45 to 100. In one embodiment **a** is in the range from 45 to 55. In one embodiment **a** is in the range from 48 to 52. In one embodiment **b+c** is in the range from 0 to 55. In one embodiment **b+c** is in the range from 45 to 55. In one embodiment **b+c** is in the range from 48 to 52. In one embodiment **a/(b+c)** is in the range from 0.9 to 1.1. In one embodiment **a/(b+c)** is about 1. In one embodiment **a+b+c** is at least 90. In one embodiment **a+b+c** is at least 95. In one embodiment **a+b+c** is at least 99. In one embodiment **a+b+c** is about 100. In one embodiment **b** is at least 20. In one embodiment b is at least 40. In one embodiment **b** is at least **45.**

In one embodiment the polymeric material comprises repeat units where at least 98% of said repeat units consist essentially of moieties **(I), (II)** and/or **(III).**

In one embodiment the polymeric material comprises a homopolymer having a repeat unit of general formula **(IV):**

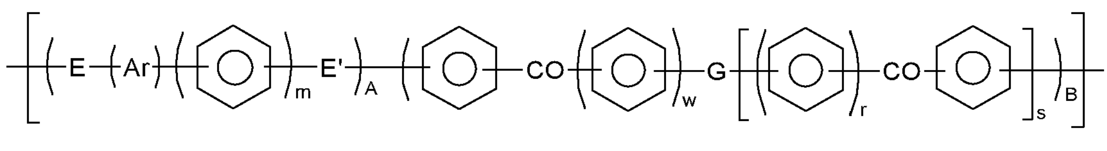 IV

or a homopolymer having a repeat unit of general formula **(V):**
or a random or block copolymer formed from at least two different units of **(IV)** and/or **(V),** wherein:

**A** and **B** each represent 0 or 1, wherein at least one **of A** and **B** is 1;
**C** and **D** each represent 0 or 1, wherein at least one of **C** and **D** is 1; and
**E, E', G, Ar, m, r, s, t,** v, w and z are each as defined according to any statement herein.

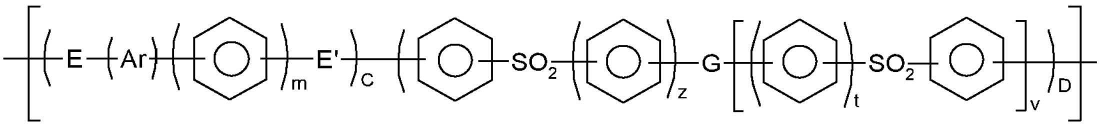

V

In one embodiment **m** is an integer in the range from 0 to 3. In one embodiment **m is** 0, 1 or 2. In one embodiment **m** is 0 or 1. In one embodiment r is an integer in the range from 0 to 3. In one embodiment **r is** 0, 1 or 2. In one embodiment **r is** 0 or 1. In one embodiment **t** is an integer in the range from 0 to 3. In one embodiment is 0, 1 or 2. In one embodiment t is 0 or 1. In one embodiment **s** is 0 or 1. In one embodiment v is 0 or 1. In one embodiment **w is** 0 or 1. In one embodiment z is 0 or 1. In one embodiment the polymeric material is a homopolymer having a repeat unit of general formula **(IV).**

In one embodiment **Ar** is -(1,4-phenylene)-C(O)-(1,4-phenylene)-, -(1,4-phenylene)-O-(1,4-phenylene)-O-(1,4-phenylene)-, -(1,4-phenylene)-$C(CH_3)_2$-(1,4-phenylene)-, -(1,4-phenylene)-C(O)-phenylene-C(O)-(1,4-phenylene)- or -(1,4-phenylene)-.

In one embodiment the middle phenylene group of -(1,4-phenylene)-C(O)-phenylene-C(O)-(1,4-phenylene)- may be 1,3- or 1,4-linked. In one embodiment it is 1,4-linked.

In one embodiment **Ar** is -phenylene-C(O)-phenylene-, -phenylene-, -phenylene-O-(1,4-phenylene)-O-phenylene- or -phenylene-C(O)-phenylene-C(O)-phenylene-.

In one embodiment **Ar** is -phenylene-C(O)-phenylene-C(O)-phenylene-, -phenylene- or -phenylene-C(O)-phenylene-.

In one embodiment **Ar** is -(1,4-phenylene)-C(O)-phenylene-C(O)-(1,4-phenylene)-, -(1,4-phenylene)-C(O)-(1,4-phenylene)-, -(1,4-phenylene)-O-(1,4-phenylene)-O-(1,4-phenylene)- or -(1 ,4-phenylene)-.

In one embodiment **Ar** is -(1,4-phenylene)-C(O)-phenylene-C(O)-(1,4-phenylene)-, -(1,4-phenylene)-C(O)-(1,4-phenylene)- or -(1 ,4-phenylene)-.

In one embodiment the polymeric material includes at least 60mole% of repeat units which do not include -S- or -$SO_2$- moieties. In one embodiment the polymeric material includes at least 70mole% of repeat units which do not include -S- or -$SO_2$- moieties. In one embodiment the polymeric material includes at least 80mole% of repeat units which do not include -S- or -$SO_2$- moieties. In one embodiment the polymeric material includes at least 90mole% of repeat units which do not include -S- or -$SO_2$- moieties.

In one embodiment the polymeric material comprises at least 60mole% of repeat units which consist essentially of phenylene moieties, ether moieties and ketone moieties. In one embodiment the polymeric material comprises at least 70mole% of repeat units which consist essentially of phenylene moieties, ether moieties and ketone moieties. In one embodiment the polymeric material comprises at least 80mole% of repeat units which consist essentially of phenylene moieties, ether moieties and ketone moieties. In one embodiment the polymeric material comprises at least 90mole% of repeat units which consist essentially of phenylene moieties, ether moieties and ketone moieties.

In one embodiment the polymeric material(s) (potentially including co-polymers) comprises repeat units that consist essentially of phenylene moieties in conjunction with ketone and/or ether moieties.

In one embodiment the polymeric material does not include repeat units which include -S- or -$SO_2$- moieties nor aromatic groups other than phenylene.

In one embodiment the polymeric material has at least 98% of its repeat units consisting essentially of formula **(IV)** wherein **Ar** is -phenylene-, **E** and E' are each -O-, **m =** 0, **w =** 1, G is a direct bond, s = 0, **and A** and **B** are each 1. (i.e. polyetheretherketone).

In one embodiment the polymeric material has at least 98% of its repeat units consisting essentially of formula **(IV)** wherein **E** is -O-, **E' is** a direct bond, **Ar** is -phenylene-C(O)-phenylene-C(O)-phenylene-, **m =** 0, **A** = 1 and **B** = 0. (i.e. polyetherketone).

In one embodiment the polymeric material has at least 98% of its repeat units consisting essentially of formula **(IV)** wherein **E** is -O-, **Ar** is -phenylene-C(O)-phenylene-C(O)-phenylene-, **m =** 0, **E'** is a direct bond, **A** = 1 and **B** = 0. (i.e. polyetherketoneketone).

In one embodiment the polymeric material has at least 98% of its repeat units consisting essentially of formula **(IV)** wherein **Ar** is -phenylene-C(O)-phenylene-C(O)-phenylene-, **E** and **E'** are both -O-, **G** is a direct bond, **m** = 0, **w** = 1, r = 0, s = 1, and **A** and **B** are both 1. (i.e. polyetherketoneetherketoneketone).

In one embodiment the polymeric material has at least 98% of its repeat units consisting essentially of formula **(IV),** wherein **Ar** is -phenylene-, **E** and **E'** are both -O-, **G** is a direct bond, **m** = 0, **w** = 0 and **s, r, A** and **B** are all 1. (i.e. polyetheretherketoneketone).

In one embodiment the polymeric material has at least 98% of its repeat units consisting essentially of formula

**(IV),** wherein **Ar** is -phenylene-, E and E' are both -O-, m = 1, **w** = 1, A = 1, **B** = 0, and G is a direct bond (i.e. polyetherdiphenyletherketone).

In one embodiment the main peak of the melting endotherm (Tm) for said polymeric material may be at least 300°C.

In one embodiment the polymeric material comprises a repeat unit of formula (XX):

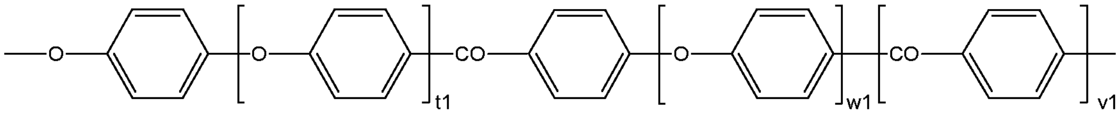

**(XX)**

wherein **t1** = 0 or 1, **w1** = 0 or 1 and v1 represents 0, 1 or 2.

In one embodiment the polymeric material has at least 98% of its repeat units consisting essentially of formula **(XX).**

In one embodiment the polymeric material has at least 98% of its repeat units consisting essentially of formula **(XX)** wherein **t1** = 0 or 1, **w1 = 0 or 1** and **v1** represents 0, 1 or 2.

In one embodiment the polymeric material comprises a repeat unit of formula **(XX)** wherein **t1**=1, **v1=0** and **w1=0.**

In one embodiment the polymeric material has at least 98% of its repeat units consisting essentially of formula **(XX)** wherein **t1**=1, **v1**=0 and **w1**=0.

In one embodiment the polymeric material comprises a repeat unit of formula **(XX)** wherein **t1**=0, **v1**=0 and **w1=0.**

In one embodiment the polymeric material has at least 98% of its repeat units consisting essentially of formula **(XX)** wherein **t1**=0**,** **v1**=0 and **w1**=0.

In one embodiment the polymeric material comprises a repeat unit of formula **(XX)** wherein **t1=0, w1=1** and **v1**=2.

In one embodiment the polymeric material has at least 98% of its repeat units consisting essentially of formula **(XX)** wherein **t1=0, w1=1** and **v1**=2.

In one embodiment the polymeric material comprises a repeat unit of formula **(XX)** wherein **t1=0, v1**=1 and **w1=0.**

In one embodiment the polymeric material has at least 98% of its repeat units consisting essentially of formula **(XX)** wherein **t1**=0, **v1**=1 and **w1**=0**.**

In one embodiment the polymeric material comprises a repeat unit of formula **(XX)** wherein **t1=1, v1**=0 and **w1=0.**

In one embodiment the polymeric material has at least 98% of its repeat units consisting essentially of formula **(XX)** wherein **t1**=1, **v1**=0 and **w1=0.**

In one embodiment the polymeric material comprises a repeat unit of formula **(XX)** wherein **t1=0, v1**=0 and **w1=0.**

In one embodiment the polymeric material has at least 98% of its repeat units consisting essentially of formula **(XX)** wherein **t1**=0, **v1**=0 and **w1=0.**

In one embodiment the polymeric material comprises a repeat unit of formula **(XX)** wherein **t1=1, v1**=0 and **w1=0.**

In one embodiment the polymeric material has at least 98% of its repeat units consisting essentially of formula **(XX)** wherein **t1**=1, **v1**=0 and **w1=0.**

In one embodiment the polymeric material comprises polyetheretherketone polyetherketone, polyetherketoneetherketoneketone, polyetherketoneketone or polyetherdiphenyletherketone

In one embodiment the polymeric material is selected from polyetheretherketone polyetherketone, polyetherketoneetherketoneketone, polyetherketoneketone and polyetherdiphenyletherketone.

In one embodiment the polymeric material comprises polyetherketone or polyetheretherketone.

In one embodiment the polymeric material is polyetherketone or polyetheretherketone.

In one embodiment the polymeric material comprises polyetheretherketone.

In one embodiment the polymeric material is polyetheretherketone.

In one embodiment the polymeric material has a repeat unit of formula

-O-Ph-O-Ph-CO-Ph- I

and a repeat unit of formula

-O-Ph-Ph-O-Ph-CO-Ph- II

wherein Ph represents a phenylene moiety
wherein the repeat units I and II are in the relative molar properties I:II of from 65:35 to 95:5.

In one embodiment the pipe comprises a composition which includes said polymeric material and one or more

fillers.

In one embodiment the pipe may consist essentially of a composition which consists essentially of said polymeric material and one or more fillers.

In one embodiment the polymeric material makes up at least 60wt% of the total thermoplastic polymeric material in the composition from which the pipe is made. In another embodiment the above-mentioned figure is at least 70wt%. In another embodiment the above-mentioned figure is at least 80wt%. In another embodiment the above-mentioned figure is at least 90wt%. In another embodiment the above-mentioned figure is at least 95wt%.

A single polymeric material (as described herein) is preferably substantially the only thermoplastic polymer in said composition. Suitably, a reference to a thermoplastic polymer refers to a polymer which is melted in the formation of said pipe.

A filler is suitably a material which is not melted during the manufacture of said pipe. Said filler suitably has a melting temperature greater than 350°C and preferably greater than 400°C.

Said filler may include a fibrous filler or a non-fibrous filler. Said filler may include both a fibrous filler and a non-fibrous filler. A said fibrous filler may be continuous or discontinuous. A said fibrous filler may be selected from inorganic fibrous materials, non-melting and high-melting organic fibrous materials, such as aramid fibres, and carbon fibre. A said fibrous filler may be selected from glass fibre, carbon fibre, asbestos fibre, silica fibre, alumina fibre, zirconia fibre, boron nitride fibre, silicon nitride fibre, boron fibre, fluorocarbon resin fibre and potassium titanate fibre. Preferred fibrous fillers are glass fibre and carbon fibre. A fibrous filler may comprise nanofibres.

However, such a filler (particularly a fibrous filler) could detrimentally increase the roughness on the inside of the pipe and therefore reduce fluid flow through the pipe in use.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, polybenzimidazole (PBI), carbon powder, nanotubes and barium sulfate. The non-fibrous fillers may be introduced in the form of powder or flaky particles.

Preferably, said filler comprises one or more fillers selected from glass fibre, carbon fibre, carbon black and a fluorocarbon resin. More preferably, said filler comprises glass fibre or carbon, especially discontinuous, for example chopped, glass fibre or carbon fibre.

In one embodiment the composition includes 35-100wt% of said polymeric material.

In one embodiment the composition includes 50-100wt% of said polymeric material.

In one embodiment the composition includes 65-100wt% of said polymeric material.

In one embodiment the composition includes at least 90wt% of said polymeric material.

In one embodiment the composition includes at least 95wt% of said polymeric material.

In one embodiment the composition includes at least 98wt% of said polymeric material.

In one embodiment the composition does not include a reinforcing filler (e.g. carbon fibre) but may include a non-reinforcing filler (e.g. talc or carbon black). Such a non-reinforcing filler may be included to reduce costs and/or to colour the pipe.

In one embodiment the total amount of filler in the composition is 65wt% or less.

In one embodiment the total amount of filler in the composition is 50wt% or less.

In one embodiment the total amount of filler in the composition is 35wt% or less.

In one embodiment the total amount of filler in the composition is 10wt% or less.

In one embodiment the total amount of filler in the composition is 7.5wt% or less.

In one embodiment the total amount of filler in the composition is 5wt% or less.

In one embodiment the total amount of filler in the composition is 5wt% or less and includes carbon black.

In one embodiment the composition includes carbon black as a filler.

In one embodiment the total amount of filler in the composition is 2.5wt% or less.

In one embodiment the total amount of filler in the composition is 1wt% or less.

In one embodiment the composition includes substantially no filler.

In one embodiment the composition includes at least 95%wt of said polymeric material and at least 0.1wt% of a non-fibrous filler that is carbon black.

In one embodiment the composition includes at least 98%wt of said polymeric material and at least 0.1 wt% of a non-fibrous filler that is carbon black.

In one embodiment the pipe consists essentially of a polymeric material where at least 98% of its repeat units are of the formula **(XX).**

In one embodiment the pipe has a composition that consists essentially of a polymeric material where at least 98% of its repeat units are of the formula **(XX)** together with one or more fillers where the total amount of filler in the composition is 5wt% or less.

The incorporation of carbon black into the composition provides a pipe that works particularly well in any subsequent process where other materials are laser-welded onto the outside surface of the pipe. Accordingly, in one

embodiment the pipe has a composition where between 0.05wt% and 5wt% of the composition is a filler that is carbon black. In one embodiment this range is 0.05wt% to 2.5wt%. In another embodiment this range is 0.05wt% to 1.5wt%. In one embodiment this range is 0.05wt% to 1wt%.

In one embodiment the pipe consists essentially of a polymeric material which is polyetheretherketone together with one or more fillers where the total amount of filler in the composition is 5wt% or less.

In one embodiment the pipe has a composition consisting essentially of a polymeric material which is polyetheretherketone together with carbon black where the carbon black is between 0.05wt% and 5wt% of the composition. In one embodiment this range is 0.05wt% to 2.5wt%. In another embodiment this range is 0.05wt% to 1.5wt%. In one embodiment this range is 0.05wt% to 1wt%.

In this specification, when referring to a pipe or length of a pipe, this refers to a pipe that is extruded/extrudable in a single extrusion process, rather than the length being formed from two or more individual pipe sections that are joined together.

Accordingly, in any embodiment herein, the pipe comprises a single extrusion.

In a further embodiment the pipe comprises a single extrusion, has substantially constant cross-section along its entire length and has a length of at least 100m.

In one embodiment the pipe has a length of at least 5m.

In one embodiment the pipe has a length of at least 10m.

In one embodiment the pipe has a length of at least 50m.

In one embodiment the pipe has a length of at least 100m.

In one embodiment the pipe has a length of at least 500m.

In one embodiment the pipe has a length of at least 1km.

In one embodiment the pipe has a length of at least 1.5km.

In one embodiment the pipe has a length of at least 2km.

In one embodiment the pipe has a length of at least 2.5km.

In one embodiment the pipe has a length of at least 3km.

In one embodiment the pipe has a length of at least 3.5km.

In one embodiment the pipe has a substantially constant cross-section along its entire length. In one embodiment the pipe has an annular cross-section, for example a circular cross-section. In some embodiments the elongate opening of the calibrator device has an annual cross-section, for example a circular cross-section.

The pipe produced according to this invention may be used as one continuous length or may be cut into shorter lengths (for example 0.5m, 1m, 5m) for technology applications that require such shorter lengths.

In some embodiments the pipe has an outside diameter of at least 0.6cm.

In some embodiments the pipe has an outside diameter of at least 2.5cm.

In some embodiments the pipe has an outside diameter of at least 7cm.

In some embodiments the pipe has an outside diameter of at least 10cm.

In some embodiments the pipe has an outside diameter of at least 15cm.

In some embodiments the pipe has an outside diameter of less than 50cm.

In some embodiments the pipe has an outside diameter of less than 40cm.

In some embodiments the pipe has an outside diameter of less than 30cm.

In some embodiments the pipe has an outside diameter in the range from 0.5cm to 35cm.

In some embodiment the pipe has an outside diameter in the range from 0.6cm to 31cm.

The outside diameter of a pipe may be defined as "d" cm and the thickness of the pipe wall may be defined as "t" cm. Accordingly the diameter to thickness ratio (d/t) can be defined for a pipe. In some embodiments the diameter to thickness ratio of the pipe is at least 6.

In some embodiments the diameter to thickness ratio of the pipe is in the range from 6 to 40.

In some embodiments the diameter to thickness ratio of the pipe is in the range from 15 to 40.

In one aspect of the invention, the pipe (as described herein) is part of an assembly which comprises said pipe as an inner part and is surrounded by an outer part, said outer part being arranged around substantially all of the outer wall of the pipe and being arranged to reinforce the pipe. In a further embodiment of this assembly, the outer part of the assembly comprises a first material and a second material, the first material comprising a thermoplastic or thermosetting polymer and said second material comprising a fibrous material. In one embodiment the first material comprises a thermoplastic polymer. In one embodiment this thermoplastic polymer comprises a PAEK polymer. In one embodiment it comprises polyetheretherketone polymer. In some embodiments the second material comprises a fibrous material wherein the fibrous material is carbon fibre. In some embodiments of this aspect of the invention the outer part comprises greater than ten layers which are overlaying each other.

In one aspect of the invention, the pipe (as described herein) is pulled through a heated or cooled die, post extrusion. The diameter of the die may be no less than 95% of the pipe outside diameter, for example, the diameter of the die may be from 95% the diameter of the pipe to 99.9% the diameter of the pipe. In one example, the die may be from 96%

the diameter of the die to 98% the diameter of the die. It has been surprisingly found that a pipe being passed or pulled through a die post extrusion exhibits a significant reduction in residual stress.

## Experimental Details

### Example 1 - polymeric material for pipe manufacture

A blend of Victrex 650G (PEEK polymer having a melt viscosity according to ISO 11443 of 475 Pa.s, available from Victrex manufacturing Limited, Hillhouse International, Thornton Cleveleys, Lancashire, UK) and PEEK-PEDEK copolymer made according to the following:

A 300 litre vessel fitted with a lid, stirrer/stirrer guide, nitrogen inlet and outlet was charged with diphenylsulphone (125.52kg) and heated to 150°C. Once fully melted 4,4'-diflurobenzophenone (44.82kg, 205.4mol), 1,4-dihydroxybenzene (16.518kg, 150mol) and 4,4'-dihydroxydiphenyl (9.311kg, 50mol) were charged to the vessel. The contents were then heated to 160°C. While maintaining a nitrogen blanket, dried sodium carbonate (21.368kg, 201.6mol) and potassium carbonate (1.106kg, 8mol), both sieved through a screen with a mesh of 500 micrometres, were added. The temperature was raised to 180°C at 1 °C/min and held for 100 minutes. The temperature was raised to 200°C at 1 °C/min and held for 20 minutes. The temperature was raised to 305°C at 1 °C/min and held until desired melt viscosity was reached, as determined by the torque rise of the stirrer. The required torque rise was determined from a calibration graph of torque rise versus MV. The reaction mixture was poured via a band caster into a water bath, allowed to cool, milled and washed with acetone and water. The resulting PEEK-PEDEK polymer powder was dried in a tumble dryer until the contents temperature measured 112°C.

The blend was formed by melt kneading 95% by weight 650G polymer and 5% by weight PEEK-PEDEK polymer above the melting temperature of the 650G polymer in a ZSK twin screw extruder through a die to form a lace and granulating the extruded lace into granules.

It should be noted that a mixture of granules or coarse powder of 650G and PEEK-PEDEK can be fed directly into the pipe extruder and this has the benefit of reducing the number of heating cycles that the polymer blend is subject to prior to making the pipe.

### Comparative example

Victrex 381G was used as a comparative example. Victrex 381G (PEEK polymer having a melt viscosity according to ISO 11443 of 300 Pa.s, available from Victrex manufacturing Limited, Hillhouse International, Thornton Cleveleys, Lancashire, UK) has typical PEEK-like crystallisation kinetics and is considered a fast crystallising polymeric material. Victrex 381G is a recommended grade of PEEK polymer for general extrusion processes such as extruded pipes.

### Method for determining kinetic parameters and crystallisation

Differential scanning calorimetry, DSC, measurements were performed on a TA instruments DSC2500 available from TA Instruments™. Samples of polymeric materials of Example 1 and the Comparative example were heated to 400°C, held for 5 minutes, cooled at 20°C/min to 320°C then held isothermally to allow crystallisation to proceed. The dual Avrami model was fitted to the isothermal data numerically, from the point at which crystallisation started (running integral exceeded 0.0001% or total).

After isothermal crystallisation at 320°C, the crystallisation X% of Example 1 and the Comparative example was determined using a reference value for 100% crystallinity of 130 J/g.

### Results

The inventors have surprisingly found that a polymeric composition with modified crystallisation kinetic parameters improve the mechanical properties of the extruded pipe, while maintaining low levels of residual stress. By making a polymer blend comprising both fast crystallising PEEK and slower crystallising PEEK-PEDEK copolymer, the residual stresses formed on cooling the polymeric material through the pipe extrusion process are managed so that maximum crystallinity, mechanical strength and chemical resistance is retained in the pipe while minimal residual stresses develop. A further benefit of the invention is that the selection of the modified polymer to extrude the pipe reduces the requirement for controlled cooling of the pipe which is not always possible for thick walled or where large diameter pipes.

Table 1 - kinetic parameters

| | N1 | N2 | K1 | K2 | Log10(K1) |
|---|---|---|---|---|---|
| Victrex 381 G (comparative) | 3.06 | 2.18 | 1.03E-08 | 1.88E-06 | -7.99 |
| Example 1 | 3.57 | 2.34 | 4.88E-12 | 3.31E-08 | -11.31 |

Without being bound by theory, it is believed that to achieve the optimum crystallisation properties of the polymeric composition, selecting polymeric materials that have good crystallisation properties, yet have modified rates of crystallisation. If the polymeric composition crystallises too quickly, it will have excellent chemical resistance, but the residual stress of the resultant extruded pipe will be very high resulting in poor pipe performance. If the polymeric composition crystallises too slowly, the residual stress in the resultant pipe will be low, but crystallinity of the pipe will also be low resulting in a pipe with poor mechanical and chemical resistance properties. Determining the variation of the degree of crystallisation with time in order to modify the polymer composition so that it falls within the ranges described, results in an extruded pipe having excellent mechanical and chemical resistance properties and low levels of residual stress.

Example 1 of the present invention has an excellent final crystallinity as shown in Table 2, and therefore a pipe manufactured using this polymeric composition exhibits excellent mechanical and chemical resistance properties while exhibiting very low residual stresses along the length of the pipe, even with thick walled pipes.

Table 2 - Crystallisation

| Polymer | Crystallisation enthalpy (J/g) | % Crystallinity |
|---|---|---|
| Victrex 381 G | 31.5 | 24.2 |
| Example 1 | 31.6 | 24.3 |

## Claims

1. Use of a polymer composition to manufacture of pipe having a length of at least 1 metre, wherein the polymeric composition comprises one or more polymeric materials each comprising:

   phenylene moieties;
   ether and/or thioether moieties; and optionally
   ketone and/or sulfone moieties;
   wherein the polymeric composition has a degree of crystallisation as determined by differential scanning calorimetry, DSC, wherein the variation of the degree of crystallisation with time of the polymeric composition fits a modified Avrami model wherein:

   the primary crystallisation rate constant, K1, Log10(K1) is equal to or less than -8, and at least or equal to -13;
   the primary Avrami number, n1, is at least 2.5 and less than or equal to 3.5;
   the secondary Avrami number, n2, is at least 1.4 and less than or equal to 2.6; and
   wherein the modified Avrami model is represented by the following equation:

$$\propto (t) = \frac{1 - e^{(-K_1 t^{n1})}}{1 - e^{(-K_1 t^{n1})} + e^{((-K_1 t^{n2})\left(\frac{-\ln (0.5}{K_1}\right)^{\left(1-(\frac{n2}{n1})\right)}}},$$

   wherein $K_1$, $n_1$, and $n_2$ are the kinetic parameters.

2. The use according to claim 1, wherein Log10(K1) is less than or equal to - 9 and at least or more than -12.

3. The use according to claim 1 or 2, wherein the polymeric composition comprises a single polymeric material, or a mixture of two or more polymeric materials.

4. The use according to any preceding claim, wherein the polymeric composition comprises a copolymer or a blend of one or more polymers or copolymers.

5. The use according to any preceding claim, wherein the polymeric composition comprises a first polyaryletherketone polymer (PAEK) and a second slower crystallising PAEK polymer.

6. The use according to claim 5, wherein the second slower crystallising PAEK is selected from the following:

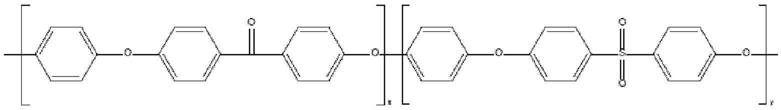

PEEK-PEES

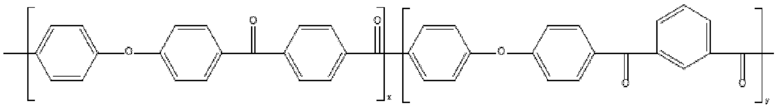

PEKK x:y < 80:20

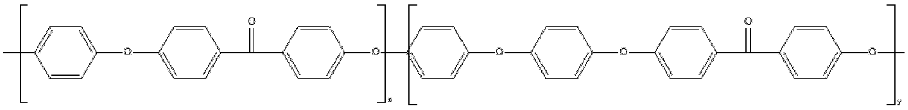

PTEK-PEDEK

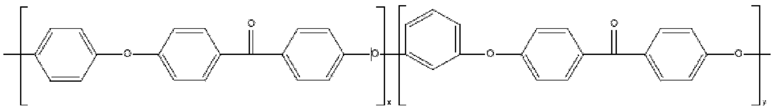

m-PEEK

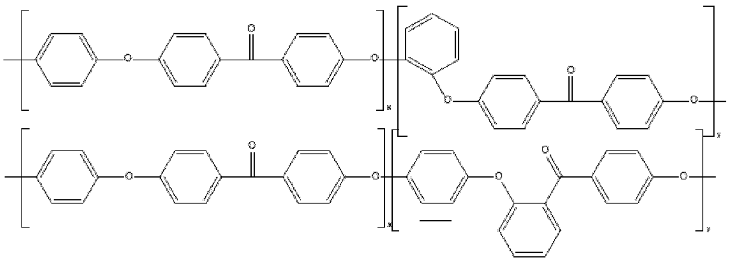

o-PEEK

PEEK from 2,4'-BDF

7. The use according to any preceding claim, wherein the second slower crystallising PAEK is a PEEK-PEDEK copolymer, a copolymer containing -ether-phenyl-ether-phenyl-carbonyl-phenyl-(i.e. PEEK) and -ether-phenyl-phenyl-ether-phenyl-carbonyl-phenyl- (i.e. PEDEK) repeat units.

8. The use according to any preceding claim, wherein the polymeric composition comprises a first polymeric material having a high molecular weight Mw, and a second polymeric material having a low molecular weight Mw, and optionally, the weight ratio of the first polymeric material and the second polymeric material is 70:30 to 97:3.

9. The use according to claim 5, wherein the first polymeric material is PEEK polymer, and the second polymeric material is a PPSU polymer, and optionally, wherein the weight ratio of the first polymeric material to the second polymeric material is 70:30 to 99:1.

10. The use according to claim 5, wherein the first polymeric material is a semi crystalline PAEK, and a second polymeric material is an amorphous PAEK, and optionally the weight ratio of the first polymeric material and the second polymeric material is 70:30 to 99:1.

11. The use according to any of claims 1 to 5, wherein the polymeric composition comprises a blend of a first polyetheretherketone - a polymer containing -ether-phenyl-ether-phenyl-carbonyl-phenyl- and a PEEK-PEDEK copolymer, a copolymer containing -ether-phenyl-ether-phenyl-carbonyl-phenyl- and -ether-phenyl-phenyl-ether-phenyl-carbonyl-phenyl- repeat units.

12. A method of manufacturing a polymer pipe from a polymer composition to manufacture of pipe having a length of at least 1 metre, wherein the polymeric composition comprises one or more polymeric materials each comprising:

phenylene moieties;
ether and/or thioether moieties; and optionally
ketone and/or sulfone moieties;
wherein the polymeric composition has a degree of crystallisation as determined by differential scanning calorimetry, DSC, wherein the degree of crystallisation fits a modified Avrami model wherein:

the primary crystallisation rate constant, K1, Log10(K1) is equal to or less than -8, and at least or equal to -13;
the primary Avrami number, n1, is at least 2.5 and less than or equal to 3.5; and
the secondary Avrami number, n2, is at least 1.4 and less than or equal to 2.6;
the method comprising the steps of by extruding the polymeric composition through a suitably shaped die and using a calibrator device to controllably cool the pipe.

**13.** A process for making a pipe, the process comprising:

using a calibrator device which includes an elongate opening for receiving a hot extruded pipe, wherein the elongate opening includes a vacuum applying region arranged to apply a vacuum to the outer surface of the pipe within the elongate opening, said device further comprises two or more temperature-controlled regions spaced apart along the length of the calibrator, said temperature controlled regions being arranged to apply a cooling effect to the pipe as it passes through the elongate opening, said calibrator device being in contact with one or more heat transfer fluids so as to assist said cooling effect on the pipe in each of the two or more temperature-controlled regions;
introducing a hot extruded pipe into the elongate opening of the calibrator and conveying the pipe through the elongate opening; while
applying a vacuum to the outer surface of the pipe as it passes through the calibrator; wherein
the temperature of the heat-transfer fluid used for the first temperature-controlled region to come into contact with the hot extruded pipe is 60°C or lower;
the temperature of heat-transfer fluid used for the subsequent temperature-controlled region(s) is/are in the range of 80°C to 150°C; and wherein

the pipe has a polymer composition comprising one or more polymeric materials each comprising:

phenylene moieties;
ether and/or thioether moieties; and optionally
ketone and/or sulfone moieties, wherein,
the polymeric composition has a degree of crystallisation as determined by differential scanning calorimetry, DSC, wherein the variation of the degree of crystallisation with time fits a modified Avrami model wherein:

the primary crystallisation rate constant, K1, Log10(K1) is equal to or less than -8, and at least or equal to -13;
the primary Avrami number, n1, is at least 2.5 and less than or equal to 3.5; and
the secondary Avrami number, n2, is at least 1.4 and less than or equal to 2.6.

## Patentansprüche

**1.** Verwendung einer Polymerzusammensetzung zum Herstellen eines Rohrs mit einer Länge von mindestens 1 Meter, wobei die Polymerzusammensetzung ein oder mehrere Polymermaterialien umfasst, die jeweils umfassen:

Phenyleneinheiten;
Ether- und/oder Thioether-Einheiten; und wahlweise Keton- und/oder Sulfoneinheiten;
wobei die Polymerzusammensetzung einen Kristallisationsgrad aufweist, der durch Differential-Scanning-Kalorimetrie, DSC, bestimmt wird, wobei die zeitliche Variation des Kristallisationsgrads der Polymerzusammensetzung einem modifizierten Avrami-Modell entspricht, wobei:

die Geschwindigkeitskonstante der primären Kristallisation, K1, Log10(K1), gleich oder kleiner als -8 und mindestens oder gleich -13 ist;
die primäre Avrami-Zahl, n1, mindestens 2,5 ist und kleiner oder gleich 3,5 ist;
die sekundäre Avrami-Zahl, n2, mindestens 1,4 ist und kleiner oder gleich 2,6 ist; und
wobei das modifizierte Avrami-Modell durch die folgende Gleichung dargestellt wird:

$$\propto(t) = \frac{1-e^{(-K_1 t^{n1})}}{1-e^{(-K_1 t^{n1})}+e^{((-K_1 t^{n2})\left(\frac{-\ln(0.5)}{K_1}\right)^{\left(1-\left(\frac{n2}{n1}\right)\right)}}},$$

wobei $K_1$, $n_1$ und $n_2$ die kinetischen Parameter sind.

2. Verwendung nach Anspruch 1, wobei Log10(K1) kleiner oder gleich -9 und mindestens oder größer als -12 ist.

3. Verwendung nach Anspruch 1 oder 2, wobei die Polymerzusammensetzung ein einzelnes Polymermaterial oder eine Mischung aus zwei oder mehreren Polymermaterialien umfasst.

4. Verwendung nach einem der vorstehenden Ansprüche, wobei die Polymerzusammensetzung ein Copolymer oder eine Mischung aus einem oder mehreren Polymeren oder Copolymeren umfasst.

5. Verwendung nach einem der vorstehenden Ansprüche, wobei die Polymerzusammensetzung ein erstes Polyaryletherketonpolymer (PAEK) und ein zweites, langsamer kristallisierendes PAEK-Polymer umfasst.

6. Verwendung nach Anspruch 5, wobei das zweite, langsamer kristallisierende PAEK aus den Folgenden ausgewählt ist:

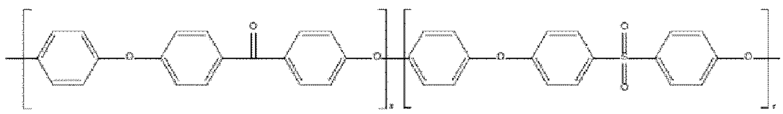

PEEK-PEES

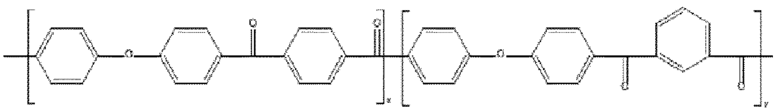

PEKK x:y = 80:20

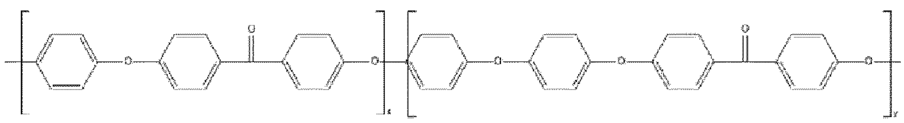

PEEK-PEDEK

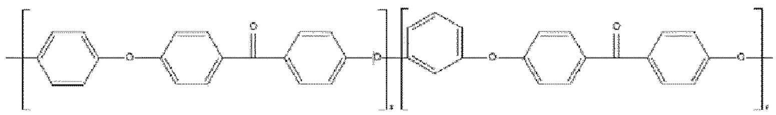

m-PEEK

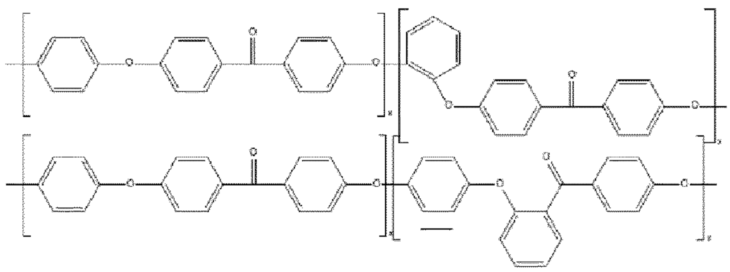

o-PEEK

PEEK aus 2,4'-BDF

7. Verwendung nach einem der vorstehenden Ansprüche, wobei das zweite, langsamer kristallisierende PAEK ein PEEK-PEDEK-Copolymer ist, ein Copolymer, das die Ether-Phenyl-Ether-Phenyl-Carbonylphenyl-Wiederholungseinheiten (d. h. PEEK-Wiederholungseinheiten) und Ether-Phenyl-Phenyl-Ether-Phenyl-Carbonylphenyl-Wiederholungseinheiten (d. h. PEDEK-Wiederholungseinheiten) enthält.

8. Verwendung nach einem der vorstehenden Ansprüche, wobei die Polymerzusammensetzung ein erstes Polymermaterial mit einem hohen Molekulargewicht Mw und ein zweites Polymermaterial mit einem niedrigen Molekulargewicht Mw umfasst, und wobei das Gewichtsverhältnis des ersten Polymermaterials zum zweiten Polymermaterial

wahlweise 70:30 bis 97:3 beträgt.

**9.** Verwendung nach Anspruch 5, wobei das erste Polymermaterial PEEK-Polymer ist und das zweite Polymermaterial ein PPSU-Polymer ist, und wobei wahlweise das Gewichtsverhältnis des ersten Polymermaterials zum zweiten Polymermaterial 70:30 bis 99:1 beträgt.

**10.** Verwendung nach Anspruch 5, wobei das erste Polymermaterial ein teilkristallines PAEK und ein zweites Polymermaterial ein amorphes PAEK ist und das Gewichtsverhältnis des ersten Polymermaterials zum zweiten Polymermaterial wahlweise 70:30 bis 99:1 beträgt.

**11.** Verwendung nach einem der Ansprüche 1 bis 5, wobei die Polymerzusammensetzung eine Mischung aus einem ersten Polyetheretherketon - einem Polymer, das Ether-Phenyl-Ether-Phenyl-Carbonylphenyl enthält - und einem PEEK-PEDEK-Copolymer, einem Copolymer, das die Ether-Phenyl-Ether-Phenyl-Carbonylphenyl-Wiederholungseinheiten und Ether-Phenyl-Phenyl-Ether-Phenyl-Carbonylphenyl-Wiederholungseinheiten enthält, umfasst.

**12.** Verfahren zum Herstellen eines Polymerrohrs aus einer Polymerzusammensetzung zum Herstellen eines Rohrs mit einer Länge von mindestens 1 Meter, wobei die Polymerzusammensetzung ein oder mehrere Polymermaterialien umfasst, die jeweils umfassen:

Phenyleneinheiten;
Ether- und/oder Thioether-Einheiten; und wahlweise
Keton- und/oder Sulfoneinheiten;
wobei die Polymerzusammensetzung einen Kristallisationsgrad aufweist, der durch Differential-Scanning-Kalorimetrie, DSC, bestimmt wird, wobei der Kristallisationsgrad einem modifizierten Avrami-Modell entspricht, wobei:

die Geschwindigkeitskonstante der primären Kristallisation, K1, Log10(K1), gleich oder kleiner als -8 und mindestens oder gleich -13 ist;
die primäre Avrami-Zahl, n1, mindestens 2,5 ist und kleiner oder gleich 3,5 ist; und
die sekundäre Avrami-Zahl, n2, mindestens 1,4 ist und kleiner oder gleich 2,6 ist;
das Verfahren die Schritte des Extrudierens der Polymerzusammensetzung durch eine entsprechend geformte Düse und die Verwendung einer Kalibriervorrichtung zum kontrollierten Kühlen des Rohrs umfasst.

**13.** Prozess zum Herstellen eines Rohrs, der Prozess umfassend:

Verwenden einer Kalibriervorrichtung, die eine längliche Öffnung zur Aufnahme eines heißen extrudierten Rohrs einschließt, wobei die längliche Öffnung einen Vakuumanlegebereich einschließt, der so angeordnet ist, dass er an die Außenfläche des Rohrs innerhalb der länglichen Öffnung ein Vakuum anlegt, wobei die Vorrichtung ferner zwei oder mehr temperaturgeregelte Bereiche umfasst, die entlang der Länge des Kalibriervorrichtung voneinander beabstandet sind, wobei die temperaturgeregelten Bereiche so angeordnet sind, dass sie einen Kühleffekt auf das Rohr ausüben, wenn es durch die längliche Öffnung hindurchgeht, und wobei die Kalibriervorrichtung mit einem oder mehreren Wärmeübertragungsfluiden in Kontakt steht, um den Kühleffekt auf das Rohr in jedem der zwei oder mehr temperaturgeregelten Bereiche zu unterstützen;
Einführen eines warmextrudierten Rohres in die längliche Öffnung in der Kalibriervorrichtung und Fördern des Rohres durch die längliche Öffnung; und gleichzeitig
Anlegen eines Vakuums an die Außenfläche des Rohrs, während es durch die Kalibriervorrichtung läuft; wobei die Temperatur des Wärmeübertragungsfluids, das für den ersten temperaturgeregelten Bereich verwendet wird, der mit dem warmextrudierten Rohr in Kontakt kommt, 60 °C oder weniger beträgt;
die Temperatur des für den/die nachfolgenden temperaturgeregelten Bereich(e) verwendeten Wärmeübertragungsfluids im Bereich von 80 °C bis 150 °C liegt; und wobei
das Rohr eine Polymerzusammensetzung aufweist, die ein oder mehrere Polymermaterialien umfasst, die jeweils umfassen:

Phenyleneinheiten;
Ether- und/oder Thioether-Einheiten; und wahlweise
Keton- und/oder Sulfoneinheiten, wobei
die Polymerzusammensetzung einen Kristallisationsgrad aufweist, der durch Differential-Scanning-Kalorimetrie, DSC, bestimmt wird, wobei die zeitliche Variation des Kristallisationsgrads einem modifizierten

Avrami-Modell entspricht, wobei:

die Geschwindigkeitskonstante der primären Kristallisation, K1, Log10(K1), gleich oder kleiner als -8 und mindestens oder gleich -13 ist;
die primäre Avrami-Zahl, n1, mindestens 2,5 ist und kleiner oder gleich 3,5 ist; und
die sekundäre Avrami-Zahl, n2, mindestens 1,4 ist und kleiner oder gleich 2,6 ist.

## Revendications

**1.** Utilisation d'une composition polymère pour la fabrication d'un tuyau d'une longueur d'au moins 1 mètre, dans laquelle la composition polymère comprend un ou plusieurs matériaux polymères comprenant chacun :

des fractions phénylène ;
des fractions éther et/ou thioéther ; et éventuellement des fractions cétone et/ou sulfone ;
dans laquelle la composition polymère a un degré de cristallisation tel que déterminé par analyse calorimétrique différentielle, ACD, dans laquelle la variation du degré de cristallisation en fonction du temps de la composition polymère correspond à un modèle d'Avrami modifié dans laquelle :

la constante de taux de cristallisation primaire, K1, Log10(K1) est inférieure ou égale à -8, et au moins égale à -13 ;
le nombre primaire d'Avrami, n1, est au moins égal à 2,5 et inférieur ou égal à 3,5 ;
le nombre secondaire d'Avrami, n2, est au moins égal à 1,4 et inférieur ou égal à 2,6 ; et
dans laquelle le modèle d'Avrami modifié est représenté par l'équation suivante :

$$\propto(t) = \frac{1-e^{(-K_1 t^{n1})}}{1-e^{(-K_1 t^{n1})}+e^{((-K_1 t^{n2})\left(\frac{-\ln(0.5)}{K_1}\right)^{\left(1-\left(\frac{n2}{n1}\right)\right)}}},$$

où $K_1$, $n_1$, et $n_2$ sont les paramètres cinétiques.

**2.** Utilisation selon la revendication 1, dans laquelle Log10(K1) est inférieur ou égal à -9 et supérieur ou égal à -12.

**3.** Utilisation selon la revendication 1 ou 2, dans laquelle la composition polymère comprend un seul matériau polymère ou un mélange de deux matériaux polymères ou plus.

**4.** Utilisation selon l'une quelconque revendication précédente, dans laquelle la composition polymère comprend un copolymère ou un mélange d'un ou plusieurs polymères ou copolymères.

**5.** Utilisation selon l'une quelconque revendication précédente, dans laquelle la composition polymère comprend un premier polymère de polyaryléthercétone (PAEK) et un second polymère de PAEK à cristallisation lente.

**6.** Utilisation selon la revendication 5, dans laquelle le second PAEK à cristallisation lente est choisi parmi ce qui suit :

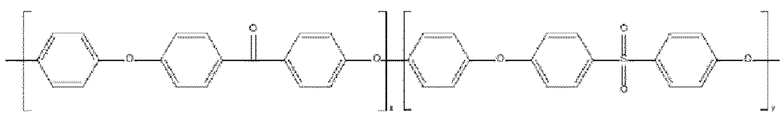

PEEK-PEES

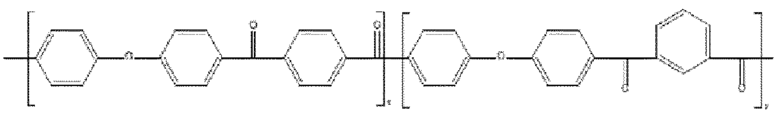

PEKK x:y < 80:20

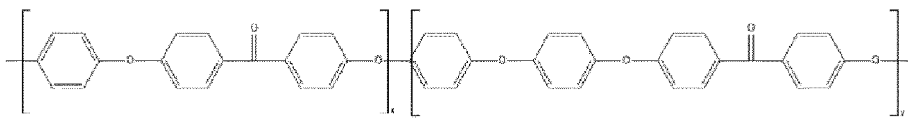

PTEK-PEDEK

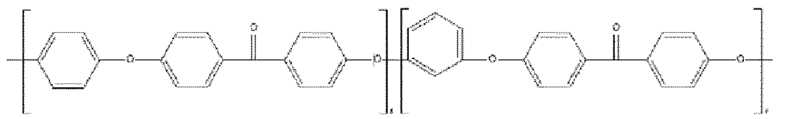

m-PEEK

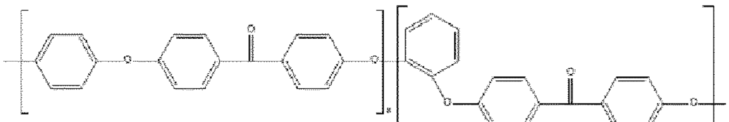

o-PEEK

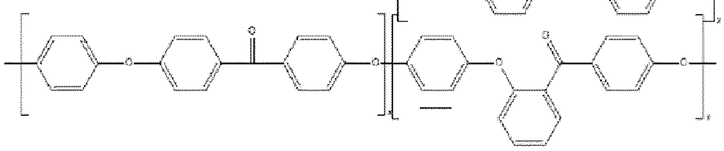

PEEK à partir de 2,4'-BDF

7. Utilisation selon l'une quelconque revendication précédente, dans laquelle le second PAEK à cristallisation lente est un copolymère PEEK-PEDEK, un copolymère contenant des unités de répétition -éther-phényl-éther-phényl-carbonyl-phényl- (c'est-à-dire PEEK) et -éther-phényl-phényl-éther-phényl-carbonyl-phényl- (c'est-à-dire PEDEK).

8. Utilisation selon l'une quelconque revendication précédente, dans laquelle la composition polymère comprend un premier matériau polymère ayant une masse moléculaire Mw élevée et un second matériau polymère ayant une masse moléculaire Mw faible, et éventuellement, le rapport pondéral du premier matériau polymère et du second matériau polymère va de 70:30 à 97:3.

9. Utilisation selon la revendication 5, dans laquelle le premier matériau polymère est un polymère PEEK, et le second matériau polymère est un polymère PPSU, et éventuellement, dans laquelle le rapport pondéral entre le premier matériau polymère et le second matériau polymère va de 70:30 à 99:1.

10. Utilisation selon la revendication 5, dans laquelle le premier matériau polymère est un PAEK semi-cristallin, et le second matériau polymère est un PAEK amorphe, et éventuellement le rapport pondéral du premier matériau polymère et du second matériau polymère va de 70:30 à 99:1.

11. Utilisation selon l'une quelconque des revendications 1 à 5, dans laquelle la composition polymère comprend un mélange d'un premier polyétheréthercétone, un polymère contenant -éther-phényl-éther-phényl-carbonyl-phényl-, et un copolymère PEEK-PEDEK, un copolymère contenant des unités de répétition -éther-phényl-éther-phényl-carbonyl-phényl- et -éther-phényl-phényl-éther-phényl-carbonyl-phényl-.

12. Procédé de fabrication d'un tuyau en polymère à partir d'une composition polymère pour fabriquer un tuyau d'une longueur d'au moins 1 mètre, dans lequel la composition polymère comprend un ou plusieurs matériaux polymères comprenant chacun :

des fractions phénylène ;
des fractions éther et/ou thioéther ; et éventuellement
des fractions cétone et/ou sulfone ;
dans lequel la composition polymère a un degré de cristallisation tel que déterminé par analyse calorimétrique différentielle, ACD, dans lequel le degré de cristallisation correspond à un modèle d'Avrami modifié dans lequel :

la constante de taux de cristallisation primaire, K1, Log10(K1) est inférieure ou égale à -8, et au moins égale à -13 ;
le nombre primaire d'Avrami, n1, est au moins égal à 2,5 et inférieur ou égal à 3,5 ; et
le nombre secondaire d'Avrami, n2, est au moins égal à 1,4 et inférieur ou égal à 2,6 ;
le procédé comprenant les étapes consistant à extruder la composition polymère à travers une filière de forme appropriée et à utiliser un dispositif de calibrage pour refroidir le tuyau de manière contrôlée.

13. Procédé de fabrication d'un tuyau, le procédé comprenant :

l'utilisation d'un dispositif de calibrage qui comprend une ouverture allongée pour recevoir un tuyau extrudé à chaud, dans lequel l'ouverture allongée comprend une zone d'application de vide agencée pour appliquer un vide

à la surface extérieure du tuyau à l'intérieur de l'ouverture allongée, ledit dispositif comprend en outre deux zones à température contrôlée ou plus espacées sur la longueur du calibreur, lesdites zones à température contrôlée étant agencées pour appliquer un effet de refroidissement au tuyau lorsqu'il passe à travers l'ouverture allongée, ledit dispositif de calibrage étant en contact avec un ou plusieurs fluides de transfert de chaleur de manière à contribuer audit effet de refroidissement sur le tuyau dans chacune des deux zones à température contrôlée ou plus ;
l'introduction d'un tuyau extrudé à chaud dans l'ouverture allongée du calibreur et le transport du tuyau à travers l'ouverture allongée ; pendant
l'application d'un vide sur la surface extérieure du tuyau lors de son passage à travers le calibreur ; dans lequel la température du fluide de transfert de chaleur utilisé pour la première zone à température contrôlée et devant venir en contact avec le tuyau extrudé à chaud est inférieure ou égale à 60 °C ;
la température du fluide de transfert de chaleur utilisé pour la ou les zones à température contrôlée suivantes est dans la plage comprise entre 80 °C et 150 °C ; et dans lequel
le tuyau a une composition polymère comprenant un ou plusieurs matériaux polymères comprenant chacun :

des fractions phénylène ;
des fractions éther et/ou thioéther ; et éventuellement
des fractions cétone et/ou sulfone, dans lequel,
la composition polymère a un degré de cristallisation tel que déterminé par analyse calorimétrique différentielle, ACD, dans lequel la variation du degré de cristallisation en fonction du temps correspond à un modèle d'Avrami modifié dans lequel :

la constante de taux de cristallisation primaire, K1, Log10(K1) est inférieure ou égale à -8, et au moins égale à -13 ;
le nombre primaire d'Avrami, n1, est au moins égal à 2,5 et inférieur ou égal à 3,5 ; et
le nombre secondaire d'Avrami, n2, est au moins égal à 1,4 et inférieur ou égal à 2,6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2012107753 A1
- WO 2020240161 A1
- WO 2020212704 A1
- WO 2021089746 A1

### Non-patent literature cited in the description

- **JIHO SEO** ; **ANNE M. GOHN** ; **RICHARD P. SCHAAKE** ; **DANIELE PARISI** ; **ALICYN M. RHOADES** ; **RALPH H. COLBY**. *Macromolecules*, 2020, vol. 53 (9), 3472-3481
- **YI NAN et al.** Slow and fast crystallising poly aryl ether ketones (PAEKs) in 3D printing: Crystallisation kinetics, morphology, and mechanical properties. *ADDITIVE MANUFACTURING*, 01 March 2021, vol. 39, 101843
- Miscibility of poly(ether ether ketone)/poly(ether diphenyl ether ketone) blends. **LING JI et al.** POLYMER. ELSE VIER, 01 September 1996, vol. 37, 4205-4208